# EUROPÄISCHE PATENTSCHRIFT

(11) **EP 0 930 201 B1**
(45) Veröffentlichungstag und Bekanntmachung des Hinweises auf die Patenterteilung: **05.07.2006**
(21) Anmeldenummer: 98124804.0
(22) Anmeldetag: 29.12.1998
(51) Int. Cl.: B60R 21/20, B60R 21/16

(54) **Flammschutz für einen Gassack**
Flame protection for an air bag
Protection anti-feu pour un sac à air

(30) Priorität: 13.01.1998 DE 29800444 U
(43) Veröffentlichungstag der Anmeldung: 21.07.1999
(73) Patentinhaber: TRW Automotive Safety Systems GmbH, 63743 Aschaffenburg (DE)
(72) Erfinder: Derrick, John-Oliver, 97265 Hettstadt (DE)
(74) Vertreter: Degwert, Hartmut

(56) Entgegenhaltungen:
- EP-A- 0 485 605
- EP-A- 0 710 194
- DE-A- 4 239 035
- US-A- 4 830 401
- PATENT ABSTRACTS OF JAPAN vol. 017, no. 389 (M-1449), 21. Juli 1993 (1993-07-21) & JP 05 069786 A (IKEDA BUSSAN CO LTD), 23. März 1993 (1993-03-23)
- PATENT ABSTRACTS OF JAPAN vol. 016, no. 122 (M-1226), 27. März 1992 (1992-03-27) & JP 03 287431 A (TOYODA GOSEI CO LTD), 18. Dezember 1991 (1991-12-18)
- PATENT ABSTRACTS OF JAPAN Bd. 014, Nr. 294 (C-0732) 26 Juni 1990 -& JP 02 093 091 A (HITACHI LTD) 03 April 1990

## Beschreibung

Die Erfindung betrifft ein Airbagmodul mit einem Gassack mit einer Eintrittsöffnung, einen Gasgenerator mit pyrotechnischer Treibladung und einem Flammschutz.

Bei der Zündung pyrotechnischer Treibladungen zum explosionsartigen Aufblasen eines Gassacks entstehen gasförmige Verbrennungsprodukte mit sehr hohen Temperaturen, denen das Material des Gassacks, das aus einem textilen Kunststoffgewebe besteht, nicht standhalten kann. Es sind daher schon verschiedene Vorschläge gemacht worden, wie Gassäcke von Airbagmodulen ausgestattet und angeordnet werden können, damit sie durch die heißen Verbrennungsgase nicht beschädigt oder gar zerstört werden können. Derartige Maßnahmen laufen unter dem Begriff "Flammschutz" und reichen von siebartigen Rückhaltesystemen, die den Austritt heißer Feststoffartikel aus dem Gasgenerator verhindern sollen, über lokale Materialdopplungen im gefährdeten Bereich bis zur vollflächigen Imprägnierung des Gassacks mit einem hitzebeständigen Material.

Soweit lokale Materialdopplungen vorgeschlagen wurden, kann nicht gewährleistet werden, daß die von den heißen Verbrennungsprodukten zuerst beaufschlagten Bereiche des Gassacks auch zuverlässig abgedeckt sind, weil sich beim Entfalten das schützende Material verschieben kann, wenn es nicht mit dem Gassackmaterial verbunden ist. Wird das Material mit dem Gassack verbunden, ergeben sich Schwierigkeiten beim Einfalten, weil die verbundene Materialdopplung zwangsläufig steifer ist als das übrige Gassackmaterial und ihrerseits zu Unregelmäßigkeiten beim Einfalten führen, so daß ungeschütztes Material im Bereich der primär einströmenden heißen Verbrennungsprodukte liegen kann.

Außerdem sind die als Flammschutz vorgeschlagenen Maßnahmen vielfach sehr aufwendig und kostspielig.

EP 0 485 605 A1 offenbart ein Airbagmodul, bei dem ein Flammschutz aus nicht brennbarem Gewebe auf die Innenseite eines Gassacks im Bereich des Gasgenerators aufgenäht ist.

Auch in der gattungsbilden den JP 05 069 786 wird ein textiler Flammschutz auf die Innenseite des Airbags in der Nähe des Gasgenerators aufgenäht.

Es besteht somit die Aufgabe, bei einem Airbagmodul der eingangs genannten Art einen wirksamen Flammschutz vorzusehen, der einfach und preisgünstig realisierbar ist, der bei den verschiedensten Gassack-Faltmethoden anwendbar ist und der zuverlässig verhindert, daß die heißen Verbrennungsgase auf das Material des Gassacks treffen, bevor sie nennenswert expandieren und damit abgekühlt sind.

Zur Lösung der Aufgabe wird ein Airbagmodul mit den Merkmalen des Anspruchs 1 vorgeschlagen.

In Weiterbildung der Erfindung ist ein Halteblech vorgesehen, der Rand der Eintrittsöffnung umgibt den Gasgenerator und ist zwischen dem Gasgenerator und dem Halteblech eingeklemmt, und der Rand der zentralen Ausnehmung des topfförmigen Textilteils ist zusammen mit dem Gassack zwischen dem Halteblech und dem Gasgenerator eingeklemmt.

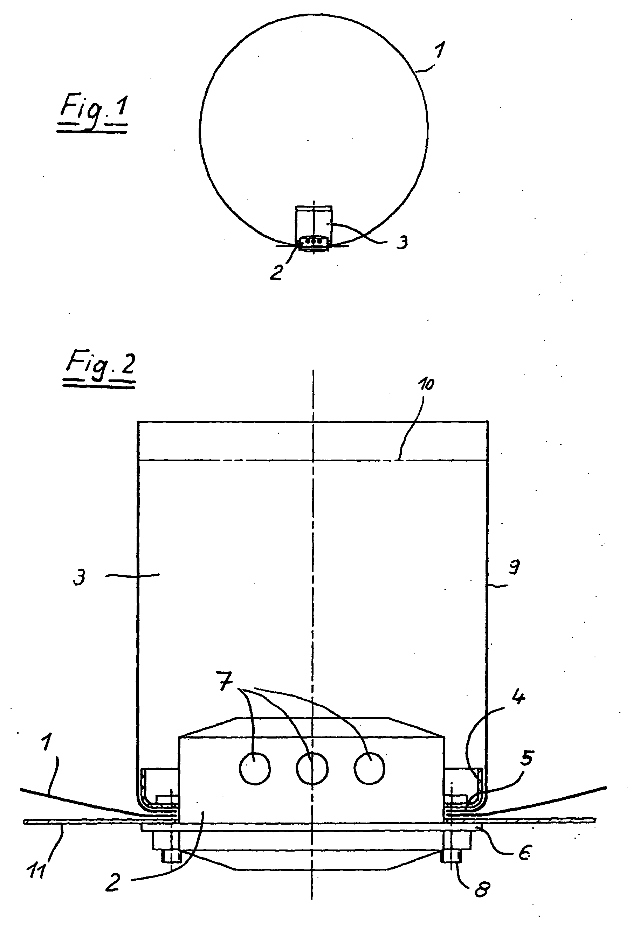

Vorteilhafte Ausgestaltungen des Erfindungsgedankens sind in den Unteransprüchen beschrieben. Weitere Einzelheiten werden anhand des in Fig. 1 und 2 dargestellten Ausführungsbeispiels näher erläutert. Es zeigen:
Fig. 1 in schematischer Darstellung ein Airbagmodul gemäß der Erfindung im aktivierten Zustand; und
Fig. 2 einen stark vergrößerten Ausschnitt aus Fig. 1.

Figur 1 zeigt einen kugelförmig aufgeblasenen Gassack 1 mit einem Gasgenerator 2 und einem Flammschutz 3, wobei Gassack 1 und Flammschutz 3 im Schnitt dargestellt sind. Der Flammschutz 3 besteht erfindungsgemäß aus einem topfförmigen Textilteil aus hitzebeständigem Material, durch das die aus dem Gasgenerator 2 im wesentlichen senkrecht zur Hauptachse des Airbagmoduls austretenden heißen Verbrennungsgase umgelenkt und in einen zumindest anfänglich parallel zur Airbaghauptachse geführten Strom gebündelt werden. Auf diese Weise wird erreicht, daß die heißen Verbrennungsgase zuverlässig vom Material des Gassacks 1 femgehalten werden, solange sie nicht wenigstens um ein gewisses Maß expandiert und damit abgekühlt sind.

Aus der Darstellung gemäß Fig. 2 ergibt sich, wie der Gassack 1 und der Boden 5 des topfförmigen Textilteils 3 randseitig zwischen einem Halteblech 4 und einem umlaufenden Flansch 6 des Gasgenerators eingeklemmt sind, wobei Schrauben 8 gleichzeitig dazu dienen können, das Airbagmodul in einem Gehäuse 11 oder dergleichen zu befestigen.

Das topfförmige Textilteil 3 ist derartig ausgelegt und eingeklemmt, daß sich seine zylindrische Wand 9 beim Aufblasen des Gassacks konzentrisch zur Hauptachse des Gasgenerators und in radialem Abstand zu dessen Austrittsöffnungen 7 erstreckt. Dadurch ist sichergestellt, daß die austretenden heißen Verbrennungsgase frühestens dann mit dem Material des Gassacks 1 in Berührung kommen können, wenn sie auf das Volumen des topfförmigen Textilteils 3 expandiert sind. Eine weitere Verbesserung kann erreicht werden, wenn der nicht eingespannte Topfrand des topfförmigen Textilteils 3, der dem Boden 5 gegenüberliegt, aufeinandergelegt und die übereinanderliegenden Bereiche mittels einer Naht 10 miteinander verbunden sind, die beim Aufblasen des Gassacks 1 aufreißt. Dadurch bleiben die heißen Verbrennungsgase im topfförmigen Textilteil 3 eingeschlossen, bis dessen Innendruck ausreicht, die Naht 10 aufzureißen. Es versteht sich von selbst, daß man durch Veränderung der Aufreißfestigkeit der Naht 10 Einfluß auf das Expansionsverhalten des Gassacks nehmen kann.

Der erfindungsgemäß ausgebildete Flammschutz kann in einfacher Weise zusammen mit dem Gassack eingeklemmt werden. Für dessen Anordnung und Befestigung innerhalb des Gassacks sind also keine zusätzlichen Mittel erforderlich. Insbesondere ist es nicht erforderlich, den Flammschutz noch anderweitig mit dem Material des Gassacks zu verbinden, so daß die eingangs erwähnten Schwierigkeiten beim Einfalten nicht entstehen können. Damit ist ein wirksamer und zuverlässiger Schutz des Gassackmaterials gegen die heißen Verbrennungsprodukte geschaffen.

## Patentansprüche

1. Airbagmodul mit einem Gassack (1) mit einer Eintrittsöffnung, einem Gasgenerator (2) mit pyrotechnischer Treibladung und einem Flammschutz (3),
- wobei der Flammschutz aus einem topfförmigen Textilteil (3) aus hitzebeständigem Material besteht, dessen Boden (5) eine der Eintrittsöffnung des Gassacks (1) entsprechende zentrale Ausnehmung aufweist, deren Rand die Eintrittsöffnung umgibt,
- wobei ein Halteblech (4) vorgesehen ist, der Rand der Eintrittsöffnung den Gasgenerator (2) umgibt und zwischen dem Gasgenerator (2) und dem Halteblech (4) eingeklemmt ist, und der Rand der zentralen Ausnehmung des topfförmigen Textilteils (3) zusammen mit dem Gassack (1) zwischen dem Halteblech (4) und dem Gasgenerator (2) eingeklemmt ist,
- wobei der Gasgenerator (2) einen zylindrischen Wandbereich aufweist, der nach der Montage innerhalb des Gassacks (1) liegt und in dem radial zur Hauptachse des Gasgenerators (2) ausgerichtete Austrittsöffnungen (7) für die gasförmigen Verbrennungsprodukte der Treibladung vorgesehen sind, **dadurch gekennzeichnet, daß**
- das topfförmige Textilteil (3) aus hitzebeständigem Material eine zylindrische Wand (9) aufweist, die sich bei aktiviertem Gassack (1) etwa parallel zur Hauptachse des Gasgenerators (2) und in radialem Abstand zu den Austrittsöffnungen (7) erstreckt und durch die die aus dem Gasgenerator (2) im wesentlichen senkrecht zur Hauptachse des Airbagmoduls austretenden heißen Verbrennungsgase umgelenkt und in einen zumindest anfänglich parallel zur Airbaghauptachse geführten Strom gebündelt werden und daß
- der Rand der zentralen Ausnehmung des topfförmigen Textilteils (3) mit dem Gassack (1) ausschließlich durch das gemeinsame Einklemmen zwischen dem Halteblech (4) und dem Gasgenerator (2) verbunden ist.

2. Airbagmodul nach Anspruch 1, **dadurch gekennzeichnet, daß** der Gasgenerator (2) ein endseitig geschlossenes zylindrisches Gehäuse mit Austrittsöffnungen (7) und einem radial nach außen vorstehenden umlaufenden Flansch (6) umfaßt, der zusammen mit dem Halteblech (4) den Klemmbereich für den Gassack (1) und das topfförmige Textilteil (3) bildet.

3. Airbagmodul nach einem der Ansprüche 1 oder 2, **dadurch gekennzeichnet, daß** die axiale Erstreckung der zylindrischen Wand (9) vom eingeklemmten Rand der zentralen Ausnehmung in dem Boden (5) bis zu ihrem offenen Ende 1 bis 3 mal so groß ist wie der Durchmesser des topfförmigen Textilteils (3).

4. Airbagmodul nach einem der Ansprüche 2 oder 3, **dadurch gekennzeichnet, daß** mit dem Halteblech (4) Befestigungsschrauben (8) verbunden sind, die sich nach der Montage durch Löcher im Boden (5) des topfförmigen Textilteils (3), im Gassack (1) und im Flansch (6) des Gasgenerators (2) erstrecken.

5. Airbagmodul nach Anspruch 4 **dadurch gekennzeichnet, daß** die Befestigungsschrauben (8) gleichzeitig zur Befestigung des Airbagmoduls in einem Gehäuse (11) dienen.

6. Airbagmodul nach einem der Ansprüche 1 bis 5, **dadurch gekennzeichnet, daß** Bereiche des an dem dem Boden (5) gegenüberliegenden Ende des topfförmigen Textilteils (3) angeordneten Topfrandes aufeinandergelegt und die übereinanderliegenden Bereiche mittels einer Naht (10) verbunden sind, die beim Aufblasen des Gassacks (1) aufreißt.

## Claims

1. An air bag module comprising a gas bag (1) having an inlet opening, an inflator (2) with a pyrotechnic propellant charge, and a flame protection (3),
- the flame protection consisting of a pot-shaped textile part (3) of a heatproof material, the bottom (5) of which has a central recess corresponding to the inlet opening of the gas bag (1), the rim of the central recess surrounding the inlet opening,
- a mounting plate (4) being provided, the rim of the inlet opening surrounding the inflator (2) and being clamped in place between the inflator (2) and the mounting plate (4), and the rim of the central recess of the pot-shaped textile part (3) being clamped in place together with the gas bag (1) between the mounting plate (4) and the inflator (2),
- the inflator (2) having a cylindrical wall portion which is located within the gas bag (1) after assembly and in which outlet openings (7) are provided for the gaseous combustion products of the propellant charge, the outlet openings being oriented radially to the main axis of the inflator (2), **characterized in that**
- the pot-shaped textile part (3) of a heatproof material has a cylindrical wall (9) which, with the gas bag (1) activated, extends roughly parallel to the main axis of the inflator (2) and radially spaced away from the outlet openings (7) and by means of which the hot combustion gases that escape from the inflator (2) substantially perpendicularly to the main axis of the air bag module are deflected and concentrated into a flow that is guided at least initially parallel to the main axis of the gas bag, and that
- the rim of the central recess of the pot-shaped textile part (3) is connected to the gas bag (1) exclusively by the joint clamping between the mounting plate (4) and the inflator (2).

2. The air bag module as set forth in claim 1, **characterized in that** the inflator (2) comprises a cylindrical housing which is closed off at the end and has outlet openings (7) and a surrounding flange (6) protruding radially outwards, the flange (6) together with the mounting plate (4) forming the clamping portion for the gas bag (1) and the pot-shaped textile part (3).

3. The air bag module as set forth in either of claims 1 and 2, **characterized in that** the axial extension of the cylindrical wall (9) from the clamped rim of the central recess in the bottom (5) to its open end is 1 to 3 times larger than the diameter of the pot-shaped textile part (3).

4. The air bag module as set forth in either of claims 2 and 3, **characterized in that** connected to the mounting plate (4) are fastener screws (8) which, after assembly, extend through holes in the bottom (5) of the pot-shaped textile part (3), in the gas bag (1), and in the flange (6) of the inflator (2).

5. The air bag module as set forth in claim 4, **characterized in that** the fastener screws (8) simultaneously serve to secure the air bag module in a housing (11).

6. The air bag module as set forth in any of claims 1 to 5, **characterized in that** portions of the pot rim arranged at the end of the pot-shaped textile part (3) opposite to the bottom (5) are placed on top of each other and the portions lying one on top of the other are connected by means of a seam (10) which tears open during inflation of the gas bag (1).

## Revendications

1. Module d'airbag comportant un coussin à gaz (1) avec un orifice d'entrée, un générateur de gaz (2) avec charge propulsive pyrotechnique et un pare-flammes (3),
- le pare-flammes étant constitué par une partie textile (3) en forme de pot en matériau thermorésistant dont le fond (5) présente un évidement central correspondant à l'orifice d'entrée du coussin à gaz (1),
- une tôle de retenue (4) étant prévue, le bord de l'orifice d'entrée entourant le générateur de gaz (2) et étant serré entre le générateur de gaz (2) et la tôle de retenue (4), et le bord de l'évidement central de la partie textile (3) en forme de pot étant serré conjointement avec le coussin à gaz (1) entre la tôle de retenue (4) et le générateur de gaz (2),
- le générateur de gaz (2) présentant une partie de paroi cylindrique qui, après le montage, est située à l'intérieur du coussin à gaz (1) et dans laquelle des orifices de sortie (7) orientés radialement par rapport à l'axe principal du générateur de gaz (2) sont prévus pour les produits de combustion gazeux de la charge propulsive, **caractérisé en ce que**
- la partie textile (3) en forme de pot en matériau thermorésistant présente une paroi cylindrique (9) qui, lorsque le coussin à gaz (1) est activé, s'étend approximativement parallèlement à l'axe principal du générateur de gaz (2) et à distance radiale par rapport aux orifices de sortie (7) et au moyen de laquelle les gaz chauds de .combustion sortant hors du générateur de gaz (2) sensiblement perpendiculairement à l'axe principal du module d'airbag, sont déviés et concentrés dans un courant de gaz qui est guidé au moins initialement parallèlement à l'axe principal du coussin à gaz, et **en ce que**
- le bord de l'évidement central de la partie textile (3) en forme de pot est relié au coussin à gaz (1) exclusivement par serrage commun entre la tôle de retenue (4) et le générateur de gaz (2).

2. Module d'airbag selon la revendication 1, **caractérisé en ce que** le générateur de gaz (2) comprend un boîtier cylindrique fermé aux extrémités, avec des orifices de sortie (7) et une bride (6) périphérique faisant saillie radialement vers l'extérieure, laquelle forme, conjointement avec la tôle de retenue (4) la zone de serrage pour le coussin à gaz (1) et pour la partie textile (3) en forme de pot.

3. Module d'airbag selon l'une des revendications 1 ou 2, **caractérisé en ce que** l'extension axiale de la paroi cylindrique (9) depuis le bord serré de l'évidement central dans le fond (5) jusqu'à son extrémité ouverte est 1 à 3 fois plus grande que le diamètre de la partie textile (3) en forme de pot.

4. Module d'airbag selon l'une des revendications 2 ou 3, **caractérisé en ce qu'**à la tôle de retenue (4) sont reliées des vis de fixation (8) qui, après le montage, s'étendent à travers des trous dans le fond (5) de la partie textile (3) en forme de pot, dans le coussin à gaz (1) et dans la bride (6) du générateur de gaz (2).

5. Module d'airbag selon la revendication 4, **caractérisé en ce que** les vis de fixation (8) servent en même temps à la fixation du module d'airbag dans un boîtier (11).

6. Module d'airbag selon l'une des revendications 1 à 5, **caractérisé en ce que** des zones du bord de pot agencées à l'extrémité opposée au fond (5), de la partie textile (3) en forme de pot, sont posées les unes sur les autres, et les zones superposées sont reliées au moyen d'une couture (10) qui se déchire au gonflage du coussin à gaz (1).
